# EUROPEAN PATENT APPLICATION

(11) **EP 1 329 834 A2**
(43) Date of publication of application: **23.07.2003**
(21) Application number: 03075026.9
(22) Date of filing: 06.01.2003
(51) Int. Cl.: G06F 17/60

(54) **Ordering merchandise over a communication network from merchandise providers**

(30) Priority: 18.01.2002 US 51342
(71) Applicant: EASTMAN KODAK COMPANY, Rochester, New York 14650 (US)
(72) Inventor: Parulski, Kenneth Alan, Eastman Kodak Company, Rochester, New York 14650-2201 (US); Thompson, Thimothy G., Eastman Kodak Company, Rochester, New York 14650-2201 (US); Chauvin, Lou, Eastman Kodak Company, Rochester, New York 14650-2201 (US); Foster, John A., Eastman Kodak Company, Rochester, New York 14650-2201 (US); Bussey, Howard E., Eastman Kodak Company, Rochester, New York 14650-2201 (US); Gotham, Pamela J., Eastman Kodak Company, Rochester, New York 14650-2201 (US)
(74) Representative: Haile, Helen Cynthia

(57) **Abstract**

The present invention is directed to a system, method, and software product for ordering of merchandise over a communication network among a plurality of merchandise providers from a plurality of order terminals, each of the order terminals being associated with a one of a plurality of business entities, comprising maintaining information with respect to business relationships between the merchandise providers and a plurality of business entities and providing an offering at one or more of a plurality of order terminals based on the business relationships associated with one or more of the order terminals.

## Description

The present invention relates to a system for ordering merchandise over a communication network. In particular, the invention allows individuals to order merchandise over a communication network from a plurality of different providers, that offer the same and/or different merchandise, and that have various types of business relationships.

For many years, catalog sales have provided an important source of merchandise sales for companies such as Sears and Penneys. In small towns, it is not economically feasible to build and stock large stores full of all of the different merchandise that people living in the area might wish to purchase. Instead, beginning over a hundred years ago, printed catalogs containing merchandise were distributed to rural customers, who ordered merchandise that was delivered to their homes, or to a local store for pick-up. In the last decade, because of the high cost of printing thick catalogs, customers do not typically receive catalogs through the mail. Instead, they come into a small store, and browse through various catalogs of interest at the "catalog" counter. These catalogs may describe and depict clothing, home furnishings, tools, kitchen items, as well as merchandise in many other product categories. A store clerk can help the customer with selections and with the ordering process. By sending all of the merchandise to a single location, the catalog company and/or the customer saves money on the shipping costs. The catalog counter also provides a place for customers to return unsuitable merchandise and resolve billing issues.

Unfortunately, it is expensive to print and update catalogs. Prices often change rapidly, and the catalog company often wants to add new merchandise while deleting merchandise that is obsolete or out of stock. Changing prices and merchandise is not possible, however, without reprinting the entire catalog, or using an expensive catalog binding technique that enables partial catalog updates.

The Internet provides an obvious alternative to catalog sales. From their home, a customer can order merchandise from many different merchandise providers, which can be paid for using a credit card, and can then be mailed or shipped to the customer's home. Compared to a catalog counter, the Internet provides a wider array of products from many different companies. However, using the Internet to order merchandise requires computer skills and equipment that many customers, particularly elderly rural customers, do not have. Furthermore, using the Internet to order merchandise is not without risks, compared to catalog ordering. For example, the Internet site may not be trustworthy. It may provide low quality merchandise, and not accept returns. Worse, it may be fraudulent and misuse a customer's credit card account.

The present invention provides a method for enabling stores having catalog counters to easily provide the latest information and prices on merchandise from a variety of providers, while maintaining a trustworthy relationship with their customers.

The present invention encourages retail catalog companies to establish various types of business relationships with merchandise providers. These business relationships are provided in a directory. The directory enables the order terminals controlled by different business entities (e.g. different retail catalog companies) to access a number of different merchandise providers which have established a cooperative business relationship with the business entity, while blocking access to merchandise providers that have a hostile business relationship. As a result, a customer has more choices of merchandise providers, and can choose from a wider range merchandise offered by numerous providers.

The present invention provides a system, method and software solution that links order terminals, such as retail catalog kiosks, ATMs, and personal order terminals together with merchandise providers, such as clothing, furniture, tools, and sports equipment providers. It provides a mechanism to define business relationships between the business entities providing the order terminal, and the merchandise providers to ensure that only appropriate providers can be accessed from a particular order terminal. It supports the ability for billing and payment information to flow around the system that gives economic incentives for participants to work together.

In accordance with one aspect of the present invention, there is provided a method for ordering of merchandise over a communication network among a plurality of merchandise providers from a plurality of order terminals, each of said order terminals being associated with a one of a plurality of business entities, comprising:
maintaining information with respect to business relationships between said merchandise providers and said plurality of business entities;
providing an offering at one or more of said plurality of order terminals based on said business relationships associated with said one or more of said order terminals.

In accordance with another aspect of the present invention, there is provided a system for facilitating ordering of merchandise over a communication network by a user among a plurality of merchandise providers from a plurality of order terminals, each of said order terminals being associated with a one of a plurality of business entities, comprising:
a control system for maintaining information with respect to business relationships between said merchandise providers and said plurality of business entities, said control system having a communication device for communicating with said plurality of order terminals over said communication network, said order terminal being used by said user displaying an offering based on said business relationships associated with said order terminal.

In accordance of a further aspect of the present invention, there is provided a computer software product for ordering of merchandise over a communication network among a plurality of merchandise providers from a plurality of order terminals, each of said order terminals being associated with a one of a plurality of business entities, comprising:
maintaining information with respect to business relationships between said merchandise providers and said plurality of business entities;
providing an offering at one or more of said plurality of order terminals based on said business relationships associated with said one or more of said order terminals.

These and other aspects, objects, features and advantages of the present invention will be more clearly understood and appreciated from a review of the following detailed description of the preferred embodiments and appended claims, and by reference to the accompanying drawings.

In the detailed description of the preferred embodiments of the invention presented below, reference is made to the accompanying drawings in which:
Fig. 1 is diagram of an embodiment of a system made in accordance with the present invention;
Fig. 2 is a flow diagram of an embodiment of a method made in accordance with the present invention, using the system of Fig. 1;
Fig. 3 is a diagram of a directory of merchandise providers and order terminals, which includes information defining business relationships; and
Fig. 4 A - D is a diagram of depicting a display of offerings on four order terminals controller by four different business entities.

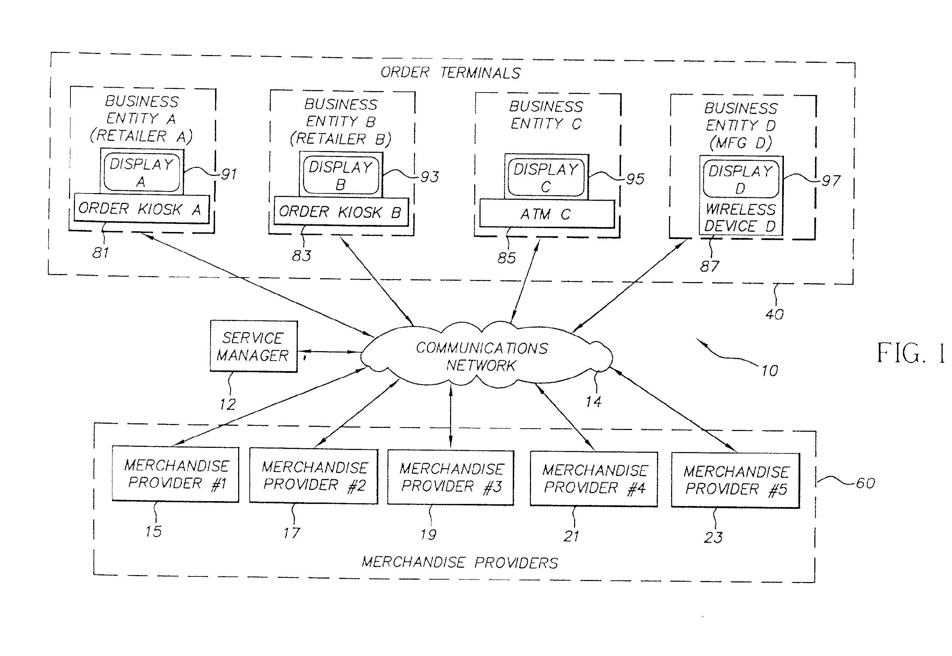

Referring to Fig. 1, there is illustrated a system 10 made in accordance with the present invention. The system 10 is designed to provide extensive offerings of merchandise from a plurality of different merchandise providers. The system 10 allows an individual merchandise provider, which may also own a retail catalog store, to concentrate on providing the goods for which they have core competencies. The system 10 also allows a retail catalog store to offer their customers merchandise from other merchandise providers with which they have established a cooperative business relationship, while blocking access to merchandise providers which have a hostile relationship with that catalog retail store. The system 10 uses standards and protocols that are followed by the members for the transmission of product information and orders over the communication network. In addition, the system 10 permits the retail catalog store to offer merchandise to a potential broader range of customers.

The system 10 includes a service manager 12 that provides several functions. In the embodiment illustrated, service manager 12 comprises is a computer/server having appropriate software programs for operation in accordance with the present invention. The service manager 12 provides a directory of various merchandise that may be obtained from merchandise providers through the system 10. Each merchandise provider registers with the service manager 12 setting forth the type of merchandise it can provide. Additional information may be provided by the merchandise provider, such as various price lists, delivery options, return policies, warranties, or any other information the merchandise provider believes may be useful by a potential purchaser. In particular, different price lists may be used depending on the business relationships, as will be described later. This information is stored by the service manager 12 in a manner that allows customers using an order terminal to search the information to find a merchandise provider that best matches their needs.

The service manager 12 is accessible by various order terminals 40, and various merchandise providers 60 over a common communication network 14. In the embodiment illustrated, the communication network 14 comprises the Internet. However, any appropriate communication network may be utilized such as a local area network (LAN) or a wide area network (WAN). In order for merchandise providers 60 to be accessed through the system 10, they must have registered with the service manager 12 providing the appropriate required information and optional information that is allowed. The registration process includes an agreement by the merchandise provider to follow the technical standards and business practices set forth by the system 10.

A plurality of merchandise providers 60 are connected to the communications network 14. The merchandise providers 60 include a first (#1) merchandise provider 15, a second (#2) merchandise provider 17, a third (#3) merchandise provider 19, a fourth (#4) merchandise provider 21, and a fifth (#5) merchandise provider 23. The service manager 12 includes a directory that provides information describing the business relationships between the business entities associated with each order terminal 40 and the merchandise providers 60.

Each order terminal 40 is associated with a particular business entity. Order terminal 81 is a catalog order kiosk associated with business entity A (retailer A). It would typically be located inside a store owned by retailer A, at the "catalog counter". For example, retailer A may be "Sears" and order terminal 81 may be owned or leased by Sears and located in one of their stores. Order terminal 81 includes a display screen 91 that is used to display an offering of products to a customer. Order terminal 83 is a second catalog order kiosk associated with a different business entity B (retailer B). For example, retailer B may be "Penneys and order terminal 83 may be owned or leased by Penneys and located in one of their stores. Order terminal 83 includes a display screen 93, which is also used to display an offering of products to a customer. In many cases, retailer A and retailer B have a hostile (e.g. competitive) relationship. For example, Retailer A would typically not want customers to come into their store and use their kiosk 81 to order merchandise from a merchandise provider controlled by retailer B. Therefore, the offerings displayed on the display screens 91 and 93 need to be customized in view of the business relationships between the business entities associated with the order terminals 40 and the merchandise providers 60.

Many different types of order terminals 40 are possible. For example, order terminal 85 is an ATM (automatic teller machine) that can be located in a public area. In addition to providing banking services, order terminal 85 can also enable a user to order merchandise. Order terminal 85 includes a display screen 95, which is used to display an offering of products to a customer. The business entity C can be a bank, or an independent business that owns or rents ATM type kiosks. Order terminal 87 is an example of a portable wireless device that can be used to place an order for merchandise. Order terminal 87 can be a cell phone, personal digital assistance (PDA), or other type of wireless device. The business entity D associated with the order terminal 87 can be the company that manufactured the device, the company that marketed the device, the retailer that sold the device, or a company that is leasing the device to the user. It is understood that many other types of order terminals are possible, including home computers that are wired to the communications network, home television set-top boxes or video game boxes connected to the internet, and other internet connected appliances.

The service manager 12 can provide several different functions. First, it provides a directory (e.g. a list) of all merchandise types available within system 10 and includes a database of all the registered merchandise providers and their related information such as unique member ID, types of merchandise, price lists, delivery capability etc. This directory can be queried from the communication network 14 to assist users select a desired merchandise provider to place an order, as will be described later herein. The registration information provided by the merchandise provider includes information describing one or more business relationships that the merchandise provider has established with particular business entities controlling order terminals. Such relationships can include friendly, hostile, and neutral relationships.

The service manager 12 can also provide a locator service or simply a locator. The locator functions to provide and receive criteria from users. The criteria are then formed into filters that can be applied to the merchandise directory database. The merchandise directory database returns a list of member providers to the locator matching the provided criteria. Examples of a criteria provided by the locator include the return policy of the merchandise provider and the brand name of merchandise, such as "Firestone" tires or "Craftsman" tools. It should be understood that the criteria can comprise a list of various desired criterion.

The service managers can also provide member validation services to requesting merchandise providers or to business entities associated with order terminals (e.g. owners of retail catalog stores) to prevent fraud by validating that a merchandise provider is a legitimate registered member, or that an order terminal is legitimate. This information can also be used to regulate pricing based on the business relationships between the business entity associated with the order terminal, and the merchandise provider.

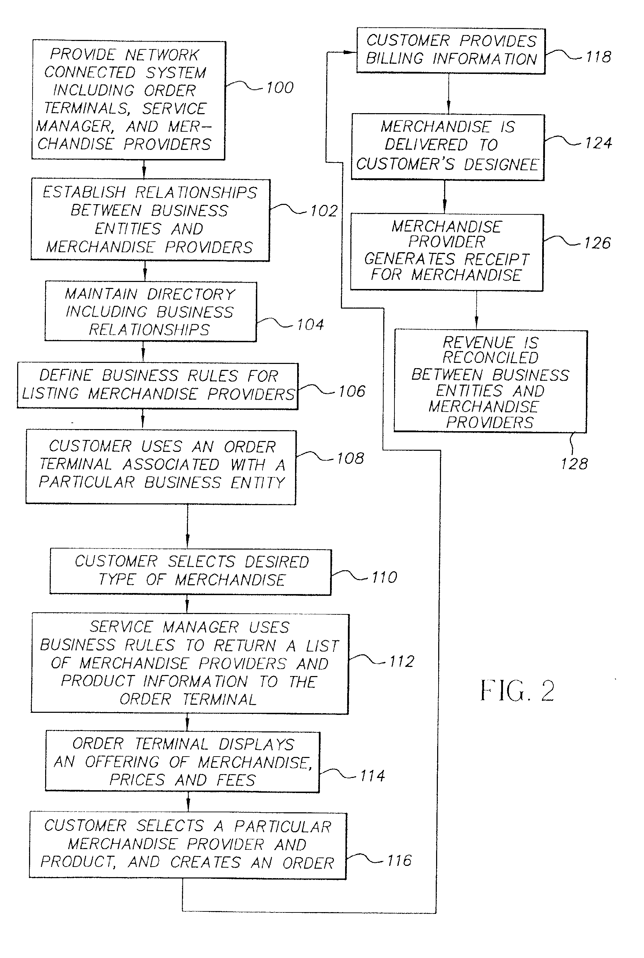

Fig. 2 is a flow diagram of an embodiment of a method made in accordance with the present invention, using the system of Fig. 1. In block 100, the business entities associated with the order terminals 40, the merchandise providers 60, and the parties controlling the service manager 12 agree on the protocols to be followed by the system, as was described earlier in relation to Fig. 1, and introduce network connected equipment conforming to these protocols.

In block 102, business relationships are established between the merchandise providers and the business entities associated with the order terminals 40. For example, but not by way of limitation, the business relationships can include a "domestic" relationship, where the same business entity that is associated with the order terminal is also associated with the merchandise provider. For example, a retailer may both own or lease many order terminals, and own or control a merchandise provider. In this case, the retailer typically prefers to preferentially feature the merchandise provider they are associated with, when listing merchandise on their order terminals.

The business relationships can also include a hostile (e.g. competitive) relationship. For example, as described earlier, a company that has both catalog order terminals and serves as a merchandise provider (e.g. Sears) may have a hostile relationship with a competitor, such as Penneys, which also serves as a merchandise provider. In this case, Sears might prefer that their order terminals preclude users from ordering merchandise from Penneys.

The business relationships can also include a "friendly" relationship. For example, a merchandise provider could have established a "strategic relationship" with a particular retailer that is associated with particular order terminals. Finally, the business relationships can also include a "neutral" relationship. A merchandise provider may choose to offer different prices for the same products, depending on whether the order is placed from an order terminal associated with a business entity having a domestic, a friendly, or a neutral business relationship with the merchandise provider.

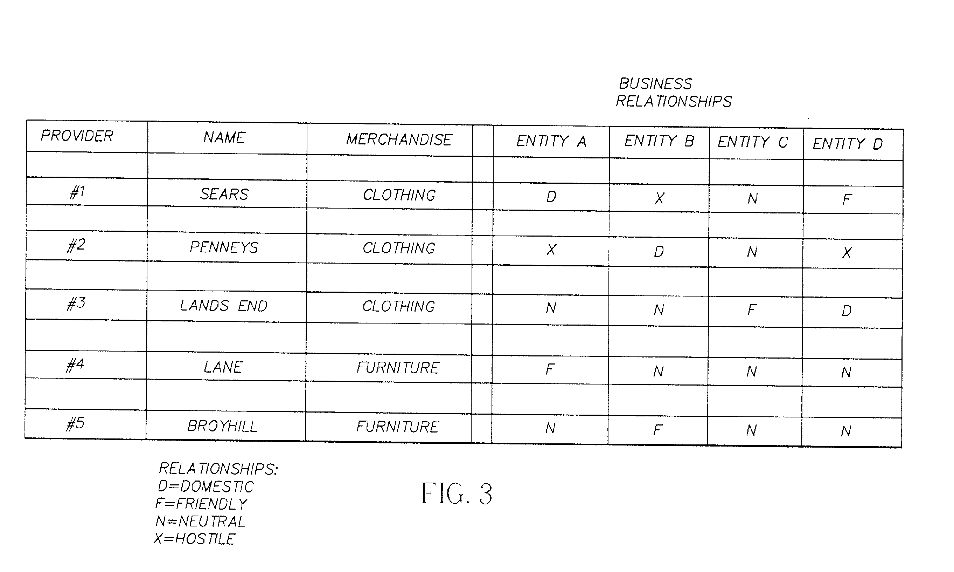

In block 104, the service manager 12 populates and maintains a directory that provides the business relationships between a plurality of business entities associated with the order terminals 40, and the merchandise providers 60. An example of such a directory is shown in Fig. 3. It will be understood that in alternative embodiments, the directory can be maintained in a various ways, for example by using a distributed directory. For example, in some alternative embodiments, the directory information describing specific business relationships can be stored in each order terminal 60. However, this is not preferred because of the difficulty of updating the directory in each order terminal as merchandise providers change their offerings, and as new merchandise providers and new products from current merchandise providers, are added to the system. It will further be understood that the information maintained by system 10 with respect to the business relationships between the business entities and the merchandise providers can be stored in ways that do not utilize a specific directory structure.

Fig. 3 depicts a directory having rows of entries for a plurality of merchandise providers 60. Each row provides the business relationship between a particular provider and the business entities associated with the plurality of order terminals 40. Each row of entries includes a provider number (e.g. #1), a provider name (e.g. Sears), the type of merchandise provided (e.g. clothing), and the business relationship between that particular merchandise provider and the business entities which control the order terminals 40. The business relationships include domestic (D), friendly (F), neutral (N) and hostile (X). The directory includes one row of entries for each of the merchandise providers (#1-#5) 15, 17, 19, 21, and 23, and one column of entries for each of the business entities (A-D) associated with the order terminals 40 in Fig. 3.

It will be understood that the directory normally includes many more entries for different merchandise providers and business entities, and many other types of merchandise. It will be further understood that the directory includes, or references, many other types of information. In a preferred embodiment, this information includes a description and images of the merchandise provided, and at least one icon for the merchandise provider, such as a graphic icon of the trade name of the merchandise provider. This information also includes the address and financial account number of the provider, and price lists which are based on the business relationship. The information can also describe the delivery methods offered by the merchandise provider, such as in store pick-up, normal mail delivery, express mail delivery, etc. The information can also include the geographic area served by the provider (e.g. what countries the provider can serve). It will be understood that the directory can be formatted and stored in various ways. Instead of the four types of relationships shown in Fig. 5, a different number of relationships can be used.

In block 106, business rules are defined for listing merchandise providers 60 on the order terminals 40. These business rules may be provided by the service manager 12, as part of the services directory, or as part of the locator. Alternatively, these business rules may be provided by the business entity controlling the order terminal 60, and stored as part of the control software for the order terminal. The business rules define how to use the business relationships, provided for example using the directory information in Fig. 3, when making an offering to the user of an order terminal. For example, the business rules can indicate that only merchandise providers having domestic relationships should be displayed, only merchandise providers having either domestic or friendly relationships should be displayed, or that merchandise providers having domestic, friendly, and neutral relationships should all be displayed. The business rules can also define how many different merchandise providers should be listed, and whether the order in which they are listed should be based on physical location, price, and/or other criteria.

In block 108, a customer uses an order terminal associated with a particular business entity. As described earlier, the order terminal can be a kiosk located at a catalog counter in a retail store, such as Sears. Alternatively, the order terminal can be an ATM located in a public building. Alternatively, the order terminal can be a cell phone or PDA having a display and user interface which enables merchandise to be ordered.

In block 110, the customer uses the order terminal 40 to select a desired type of merchandise. For example, the customer can decide to order clothing.

In block 112, the service manager 12 uses the business rules to return a list of merchandise providers and product information to the order terminal. This product information can include a description of the types of products provided, images of products, colors, sizes, and price information.. In some embodiments, the list of merchandise providers is provided by the service manager 12 to the order terminal 40 only after a user has selected a particular type of merchandise, such as clothing or furniture. In other embodiments, the list of merchandise providers, having suitable relationships with the business entity associated with the order terminal 40, can be provided by the service manager 12 to the order terminal 40 on a daily or weekly basis, for example, and stored for future use.

In block 114, the order terminal 40 displays an offering of merchandise, which normally includes the prices / fees (such as shipping fees) for the merchandise. The number and order of the merchandise providers displayed on the order terminal 40 depends on the business relationship between the merchandise providers and the business entity associated with the order terminal.

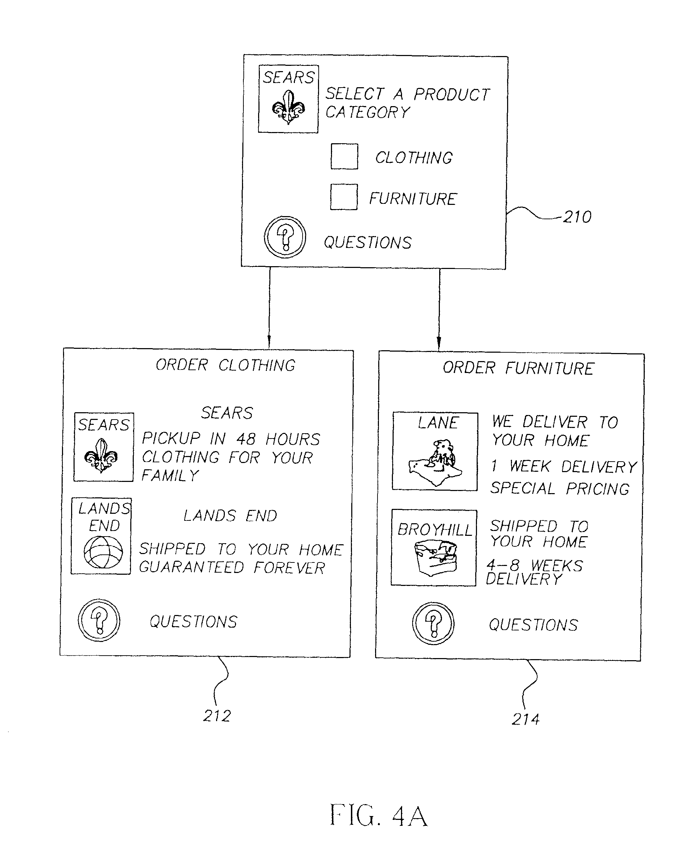

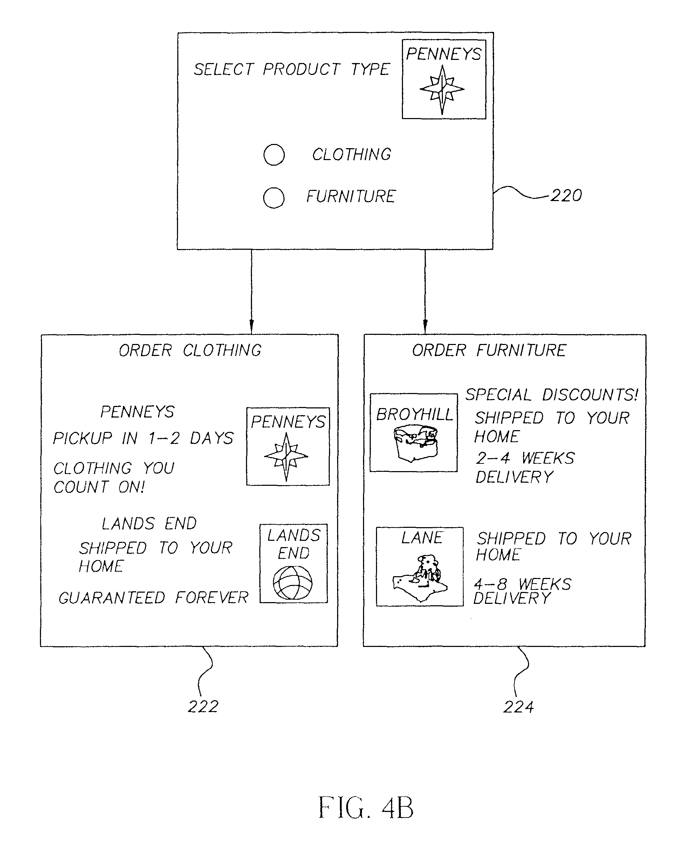

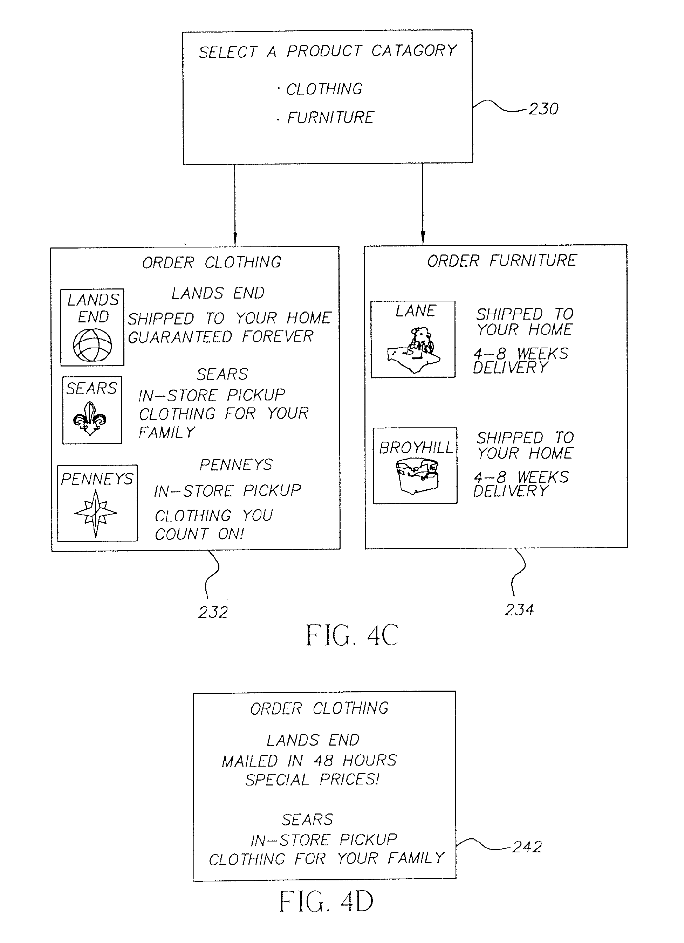

Fig. 4A, Fig. 4B, Fig 4C, and Fig 4D depict four different displays of offerings on four different order terminals (e.g. order terminals 81, 83, 85, 87 in Fig 3) associated with four different business entities. The information displayed on the order terminal display screen (e.g. displays screen 91, 93, 95, and 97 in Fig. 3) is based on the business relationships between the business entity associated with the particular order terminal and the merchandise providers.

Fig. 4A shows an example display offering for order terminal 81 in Fig. 1, for the business relationships shown in Fig. 1. A first screen 210 includes an icon for business entity A (Sears) that controls photo kiosk order terminal 81. Screen 210 enables a user to select a type of product, such as clothing or furniture, or to select an icon to answer questions concerning the system. If the user selects clothing, screen 212 is displayed on the display 91 of order terminal 81. Screen 212 includes icons and information for two clothing providers, provider #1 (Sears) which has a domestic relationship with business entity A, and provider #3 (Lands End) which has a neutral relationship with business entity A, as shown in Fig. 3. Screen 212 does not include an icon or information for provider #2 (Penneys) which has a hostile relationship with business entity A (Sears). The icon and information for provider #1 (Sears) is shown first, since there is a closer relationship with this provider than with provider #3. The prices displayed also correspond to the business relationships. In other words, the prices for provider #1 (Sears) are lower when displayed on order terminal 81, controlled by business entity A, since these companies have a domestic relationship. The prices for provider #1 could be higher when using an order terminal controlled by a business entity having a friendly or a neutral relationship, rather than a domestic relationship.

If a user instead selects furniture, screen 214 is displayed on the display 91 of order terminal 81. Since provider #4 (Lane) has a friendly relationship with business entity A, while provider #5 (Broyhill) has a neutral relationship, the merchandise offered by provider #4 is listed first. The friendly business relationship can include providing goods directly from the provider #4 to retailer A, as indicated by the "pickup in 48 hours" statement in screen 214. Furthermore, the price differences between providers #4 and #5 may reflect the different business relationships. Of course, the user may nevertheless choose merchandise provider #5 for some reason, for example because they offer types and colors of furniture not offered by provider #4, or because the user has been happier with the quality of their products in the past.

Fig. 4B shows an example display offering for photo kiosk order terminal 83 in Fig. 1, for the business relationships shown in Fig. 3. A first screen 220 includes an icon for the business entity (Penneys) that controls photo kiosk order terminal 83. Screen 220 enables a user to select a merchandise, such as clothing or furniture. If the user selects clothing, screen 222 is displayed on the display 93 of order terminal 83. Screen 222 includes icons and information for two clothing providers, provider #2 (Penneys) which has a domestic relationship with business entity B, and provider #3 (Lands End) which has a neutral relationship with business entity B, as shown in Fig. 3. Screen 222 does not include an icon or information for provider #1 (Sears) which has a hostile relationship with business entity B. Again, the icon and information for provider #2 (Penneys) is shown first, since there is a closer relationship with this provider than with provider #3. The prices displayed also correspond to the business relationships.

If a user instead selects furniture, screen 224 is displayed on the display 93 of order terminal 83. Since provider #5 (Broyhill) has a friendly relationship with business entity B, while provider #4 (Lane) has a neutral relationship, the merchandise offered by provider #5 is listed first. In this example, the friendly business relationship between business entity B and provider #5 means that the prices for furniture is less expensive when ordered from order terminal 83 than when ordered from order terminal 81, using screen 214 in Fig. 4A.

Fig. 4C shows an example display offering for ATM order terminal 85 in Fig. 1, for the business relationships shown in Fig. 3. A first screen 230 enables a user to select a type of merchandise, such as clothing or furniture. If the user selects clothing, screen 232 is displayed on the display 95 of order terminal 85. Screen 232 includes icons and information for a preferred merchandise provider, provider #3 (Lands End), which has a friendly relationship with business entity C, which is associated with order terminal 85. Screen 232 also provides icons and information for two other clothing providers, provider #2 (Penneys) and provider #1 (Sears) which have neutral relationships with business entity C.

If a user instead selects furniture, screen 234 is displayed on the display 95 of order terminal 85. Both provider #4 (Lane) and provider #5 (Broyhill) have a neutral relationship with business entity C.

Fig. 6D shows an example display offering for wireless imaging device 87 in Fig. 1, for the business relationships shown in Fig. 3. In this example, the order terminal 87 allows a user to order clothing, but does not allow a user to order furniture. When the user decides to order clothing, screen 242 is displayed on the display 97 of order terminal 87. Screen 242 enables the user to select one of two different clothing providers, provider #3 (Lands End), which has a domestic relationship with business entity D, and provider #1 (Sears), which has a neutral relationship with business entity D, as shown in Fig. 3. Screen 242 does enable the user to select provider #2 (Penneys), which has a hostile relationship with business entity A. The information for provider #3 is shown first, since there is a closer relationship with this provider than with provider #3. The prices displayed also correspond to the business relationships.

In block 116, the customer selects a particular merchandise provider and product, and creates an order. For a given user, there are several criterion which can affect their selection of a provider either explicitly or implicitly, and can include any of the following criteria: brand, cost, specific product characteristics, delivery time, delivery method, and/or the ability to ship to a specific location. Depending on the product selected by the user, and the varieties of product features offered by the selected merchandise provider, it will be understood that the user may be asked to select product characteristics, such as size, quantity, color, fabric, etc.

In block 118, the customer provides billing information. This financial transaction with the user can be handled by the business entity associated with the order terminal 40, the service manager 12, or the merchandise provider 60. In most situations, the entity which completes the transaction needs to share some of the revenue with one or more of the other parties. In some situations, this financial transaction with the user can be accomplished by using the same order terminal 40 to enter a credit card type, account number, and expiration date. In other situations, this financial transaction with the user may be done separate from the order terminal 40. For example, the order terminal 40 can create a paper or electronic receipt, and the user can then pay for the products they ordered using a separate cash-register transaction. In yet other situations, the user can have a credit account already established with the retail outlet (e.g. Sears) and the cost of the merchandise can be added to the balance due for this credit account.

In block 124, the merchandise is delivered to the customer's designee, which may of course be the customer, a different individual, or a location such as a retail store designated by the customer. The delivery could be to the same retail store where the kiosk is located, to a store in remote city (for example when ordering a gift for others), or to a home address.

In block 126, the s merchandise provider generates a receipt for the merchandise provided. In a preferred embodiment, this is an electronic receipt. The electronic receipt can be sent to the business entity associated with the order terminal 40 which provided the order, and/or to the service manager 12.

In block 128, the revenue received from many customers for as a result of ordering merchandise using system 10 is reconciled between the business entities and merchandise providers involved in the process of selecting the merchandise provider, providing the merchandise, and delivering the merchandise to the customer's designee.

The system 10 allows for periodic settlements of monies owed by producing periodic reports that are forwarded to the providers and business entities owing monies to each other. This report may include the net resulting monies owed, thus minimizing the financial transactions between the providers and business entities. The periodic reports can be done on a daily, weekly, or monthly basis as desired by the parties. The orders in the system 10 can be passed through the service manager 12 in order to keep track of the business transactions related to each order. Unique member IDs can be used for securing the confidential nature of this information and properly assigning liabilities and/or credits to member providers.

In an alternate embodiment, each merchandise provider initiates a settlement transaction report after shipping merchandise . In this case, member providers transmit the settlement transaction report directly between member providers and business entities, and cause payments of monies to flow for each completed merchandise order. The settlement transaction report is also provided to the service manager 12 for tracking of information related to quality of service and/or financial reliability that impact the credit rating or the standing of a specific member provider in the directory.

As can be seen from the foregoing, a user of system 10 now has the ability to purchase merchandise from a variety of providers, without being restricted to a single brand or type provider nor limited to the type or style of products. In addition, the provider can concentrate on their core competencies and still increase the potential number of customers for it's merchandise. In addition, the business entity associated with particular order terminals can ensure that preference is given to merchandise providers with which they have established a preferred business relationship. Unlike using an Internet web browser on a kiosk, the business entity associated with the order terminal kiosk can ensure that the kiosk is only used to order merchandise from specific merchandise providers, and is not misused for other purposes, such as "surfing the web" to inappropriate web sites.

As previously described, various criteria may be used for finding a suitable provider based on a review of information stored on the system 10 that was provided by the provider. This information can be dynamically changed to reflect the current product offerings, inventory levels, and prices of the provider. As a result, a provider may provide a price list for a particular product and a particular business relationship, that may last for only a short period of time due to a special promotion. The system 10 permits the merchandise provider to dynamically update the stored information in the directory. The update may occur as frequently as desired, or can be programmed to last for a predetermined time period. For example, a provider may set low price for a given product and some days later change the price to a different price based on a predetermined criterion such as inventory level.

A computer program product can include one or more storage media, for example; magnetic storage media such as magnetic disk (such as a floppy disk) or magnetic tape; optical storage media such as optical disk or optical tape, or machine readable bar code; solid-state electronic storage devices such as random access memory (RAM), or read-only memory (ROM); or any other physical device or media employed to store a computer program having instructions for practicing a method according to the present invention.

It is to be understood that various modifications and changes may be made without departing from the present invention, the present invention being defined by the following claims.

## Claims

1. A method for ordering of merchandise over a communication network among a plurality of merchandise providers from a plurality of order terminals, each of said order terminals being associated with a one of a plurality of business entities, comprising:
maintaining information with respect to business relationships between said merchandise providers and said plurality of business entities;
providing an offering at one or more of said plurality of order terminals based on said business relationships associated with said one or more of said order terminals.

2. A system for facilitating ordering of merchandise over a communication network by a user among a plurality of merchandise providers from a plurality of order terminals, each of said order terminals being associated with a one of a plurality of business entities, comprising:
a control system for maintaining information with respect to business relationships between said merchandise providers and said plurality of business entities, said control system having a communication device for communicating with said plurality of order terminals over said communication network, said order terminal being used by said user displaying an offering based on said business relationships associated with said order terminal.

3. A computer storage product storing a computer program having instructions for implementing the method of claim 1.

4. The method according to claim 1 or 10 wherein the offering provides a subset of merchandise providers from said plurality of merchandise providers.

5. The method according to claim 1 or 10 wherein said offering is displayed in a presentation format that is also based on said business relationship.

6. The method according to claim 1 wherein said order terminal comprises one of the following:
an automated teller machine
a catalog kiosk
a personal computer
a wireless device.

7. The method according to claim 1 wherein said plurality of business entities comprises one or more of the following:
a retail store
a manufacturer of a wireless device
an automatic teller machine owner.

8. The method according to claim 1 wherein at least one of said order terminals is located in a retail catalog store.

9. The method according to claim 1 wherein said business relationships include friendly, neutral, and hostile relationships.

10. The method according to claim 1 or 10 wherein said business relationships are maintained in a directory by a service manager.
